# EUROPEAN PATENT APPLICATION

(11) **EP 2 133 713 A1**
(43) Date of publication of application: **16.12.2009**
(21) Application number: 08158267.8
(22) Date of filing: 13.06.2008
(51) Int. Cl.: G01T 1/164, G01T 1/20, G01T 1/17

(54) **Method, device and system for localizing an interaction point**

(71) Applicant: VRIJE UNIVERSITEIT BRUSSEL, 1050 Brussel (BE)
(72) Inventor: Bruyndonckx, Peter, 3061, Leefdaal (BE); Tavernier, Stefaan, 1560, Hoeilaart (BE)
(74) Representative: Bird, William Edward

(57) **Abstract**

The present invention relates to a method of localizing an interaction point from the light distribution generated in a monolithic scintillator element, the scintillator being provided with a photodetector and the photosensitive area of the photodetector being subdivided in an array of photosensitive pixel elements, comprising sensing by the pixel elements the light distribution in response to interaction of radiation with the scintillator element and providing for each pixel element an output signal representative of the light sensed. The method further comprises, for each column of pixel elements, summing output signals of the pixel elements in that column and providing a respective summed column output signal and, for each row of pixel elements, summing output signals of the pixel elements in that row and providing a respective summed row output signal. The method furthermore comprises determining position information about the interaction point from the summed column output signals and the summed row output signals.

## Description

### Technical field of the invention

The present invention relates to a method, device and system for localizing an interaction point from the light distribution generated in a monolithic scintillator element.

### Background of the invention

Positron Emission Tomography (PET) is a medical imaging technique based on the use of drugs labelled with positron emitting isotopes. A PET scanner detects the 511 keV gamma rays produced in the positron annihilations. From the observation of a large number of positron annihilations it is possible to derive an image of the distribution of the radioactively labelled drug in the body of the patient.

Gamma scintigraphy and SPECT are medical imaging techniques based on the use of drugs labelled with a gamma emitting isotope. From the observation of a large number of gamma emissions it is possible to derive an image of the distribution of the radioactively labelled drug in the body of the patient. A gamma camera or a SPECT camera detects the gamma rays emitted by these isotopes. In these imaging techniques, the spatial resolution in the image is determined by how accurately the position of the gamma ray interaction in the scanner can be determined. A good quality PET, SPECT, or gamma scintigraphy image also requires the observation of a large number of positron annihilations or gamma emissions. The efficiency for observing such events is called the sensitivity. A PET scanner, a gamma camera or a SPECT scanner therefore needs both a large sensitivity, and accurate localisation of the gamma interaction points, to make high quality images.

Nearly all modern PET scanners use a large number of small elements of scintillating material to detect the 511 keV gamma rays. The gamma rays interact in the scintillating material and produce small flashes of light. A photodetector, usually a photomultiplier tube, detects the light distribution caused by the light flashes and determines in which of the scintillator blocks the gamma ray has interacted. Generally no attempt is made to determine where in this scintillation block the gamma ray has interacted. Therefore the accuracy of the gamma ray interaction point localisation is about equal to the size of the scintillation pixels. However, a good PET image also needs the observation of a large number of gamma annihilations, i.e. the sensitivity of the scanner should be large. A typical modern PET scanner therefore contains a large number of small elements of scintillating material (typically measuring 4x4x30 mm3).

Another possible approach is to use a larger piece of scintillating material and to derive the position of the gamma interaction point in the scintillator block from the distribution of the light over the surface of the block. This may be achieved with a multi-anode photomultiplier tube, with an Avalanche Photo Diode or with a silicon PMT. In particular these last two device types are particularly attractive because it is relatively easy to subdivide the photosensitive area in a large number of smaller-sized areas with individual photosensitive pixel elements. In this case one side or two sides of the scintillator block are in contact with a photodetector with its photosensitive area subdivided in pixel elements. From the distribution of the signal amplitude over the photodetector pixel elements, it is possible to derive the interaction point of the gamma ray in the scintillator block.

Advantages of using undivided blocks of scintillator material compared to the use of a large number of small-sized pixel elements include that a large number of small pixels give rise to a bigger fraction of dead space in the detector module (lower packing fraction) due to the presence of the material to optically separate the crystals. This may reduce the detection efficiency for the emitted annihilation photons and hence the sensitivity of the PET system.

Generally the light collection efficiency will be better in a large undivided block of scintillator material. With small pixels the exit surface of the tiny scintillation crystals relative to their length impairs the collection of the scintillation light. The subsequent lower signal-to-noise ratio (SNR) results in a degraded time and energy resolution. This leads to a lower image contrast due to the higher level of scattered and random events accepted by the PET system.

To uphold the superior spatial resolution outside the central part of the field of view (FOV), it is needed to determine the interaction depth of the 511 keV gamma ray in the crystal matrix. This in order to be able to reduce the parallax error for oblique incident photons. There are a number of ways to do that with small pixels, but these methods tend to complicate the system. In the undivided scintillator block approach, the light distribution also contains information on the depth of interaction, and this information is obtained at the same time as the information on the two other position coordinates.

For the same total amount of scintillating material, undivided blocks are less expensive to produce.

In case of a monolithic scintillator block information about the interaction position of a gamma ray in a monolithic scintillator block is embedded in the light distribution the interaction generates at an exit surface. In order to achieve a high imaging accuracy, the light distribution should be sampled fine enough by an array of small photo-sensitive pixels. This may result in a costly and complex system wherein the number of output signals from the pixels (i.e. the number of channels) becomes large.

Several attempts have been made to reduce the number of channels to be read out and processed in a scanner. Some scanners use the principle of charge division or charge sharing to reduce the number of read out channels. The charge division can be intrinsic to the photo detector (e.g. position sensitive APD) or can be added externally by an appropriate resistor network. Typically these devices have four read out channels, one on each corner of the detector. An example of such device is given in document US 7 193 208 B1. The document discloses a PET detector comprising an array of position-sensitive photosensors. Each of the photosensors has output contacts arranged in each of the four corners of the array. Two or more output contacts of neighbouring sensors are coupled to a single output channel in order to reduce the total number of output channels.

An advantage of scanners using the principle of charge division is that the number of read out channels may be reduced considerably. However by sharing the induced charges between the read out points, the shape of the detected light distribution is lost. This eliminates the possibility to extract interaction depth information. The interaction depth information is important if depth-of-interaction effects have to be corrected for in high resolution detectors, as is explained below. Moreover. the spatial resolution that can be obtained with an undivided piece of scintillator material in combination with charge division, is much worse that what can be obtained if the amplitude of individual pixelsis used.

To extract a 2D coordinate of the interaction point it is sufficient to analyse the projections of the light distribution on a plane (for instance on two coordinate axes). In addition the shape of the measured profiles also yields information on the interaction depth of the photon. In combination with a known incidence angle and the 2D interaction coordinate, a parallax-free incidence position may then be obtained. Therefore it is important to keep the information about the shape of the detected light distribution.

Document US 2006/0197025 A1 discloses a system having a scintillator block provided on two opposite sides with two pixellated photodetector arrays. In one of the embodiments the first photodetector is read out in column direction, while the second, opposite detector is read out in row direction. This double readout process provides complimentary information, that may be used to determine the position of the interaction point. However, the known system always needs the combination of at least two, oppositely arranged photosensors to be able to determine the location of the interaction point. Consequently, the known system is complicated and still needs a large number of channels to properly determine the interaction point.

### Summary of the invention

It is an object of embodiments of the present invention to provide good apparatus or methods for determining interaction information from a light distribution generated in a monolithic scintillator element. It is an advantage of at least some embodiments of the present invention to provide a method, device or system for localizing an interaction point from the light distribution generated in a monolithic scintillator element wherein at least some of the drawbacks of the prior art have been removed or alleviated. The object is accomplished by a method, device and system according to the present invention.

According to a first aspect, a device is provided for detecting light in a monolithic scintillator element, based on light sensed in at least one photodetector arranged at at least one face of the scintillator element for sensing the light distribution in response to the interaction of a gamma ray with the scintillator element. The at least one photodetector has photosensitive pixel elements, each pixel element providing an output signal representative of the light sensed by that pixel element. The at least one photodetector may be a single photodetector comprising a number, e.g. large number, of pixels, or may be a plurality of small photodetectors, having one or more pixels and being assembled to form effectively one multi pixel photodetector. The pixels may be independent pixels. The device comprises a set of column summing circuits, each column summing circuit being electrically coupled to a plurality of the pixel elements in a respective column and being configured so as to provide a summed column output signal and a set of row summing circuits, each row summing circuit being electrically coupled to a plurality of the pixel elements in a respective row and being configured so as to provide a summed row output signal. The row summing circuits and column summing circuits are adapted to be electrically coupled to a controller configured to determine position information about the interaction point from the summed column output signals and summed row output signals.

Each of the pixel elements may be coupled both to a column summing circuit and a row summing circuit. The device may comprise a controller electrically coupled to the row summing circuits and column summing circuits, the controller being configured to determine position information about the interaction point from the summed column output signals and summed row output signals.

The device may comprise an amplifier between each pixel element and the associated summing circuit for amplifying the pixel element output signal.

The gain of each amplifier may be different for each pixel to compensate for the variation in sensitivity of the photo detector pixel, or to compensate for the variation in light collection efficiency.

The gain of each amplifier may be non-linear to compensate for nonlinearity of the photo detector pixel response.

The summing circuits may be part of one, i.e. the same, or several integrated circuits.

The device, for example the controller, may comprise a derivation means for deriving an amplitude value of a detection pulse on a signal line coupled to the set of column summing circuits and the set of row summing circuits. The device, for example the controller may comprise a converting means for converting the amplitude value of the pulse to a digital number.

The derivation means, for example the controller, may be adapted for deriving the amplitude by charging a capacitor and performing ADC conversion, by sensing the peak amplitude of the pulse and performing ADC conversion, by determining the time over threshold, followed by a TDC conversion, or by sampling the pulse sufficiently fast, converting the samples values in a digital value by an ADC conversion and summing the digital values of the samples.

The derivation means and the converting means may be integrated on one or several integrated circuits.

The device, for example the controller, may be adapted so as to determine a parallax error correction in a determination of a line of flight of light sensed from information contained in the row summing circuits and column summing circuits. The parallax determining means may be realised in software, in hardware or in firmwire.

The device may comprise a block of scintillating material, i.e. a monolythic scintillator element. The device may comprise at least one photodetector with independent photosensitive pixel elements.

The device may comprise the scintillator element, whereby scintillator element may have a substantially trapezoidal shape.

The device may be applied in a PET scanner, SPECT scanner and/or a gamma scintigraphy scanner.

The present invention furthermore relates to a system such as a PET scanner, SPECT scanner and/or a gamma scintigraphy scanner comprising a device as described above.

The present invention also relates to a method for detecting light in a monolithic scintillator element, the method comprising obtaining for a plurality of independent pixel elements an output signal, representative of light sensed in response to interaction of radiation with a scintillator element, summing output signals of pixel elements in the same column and providing a respective summed column output, summing output signals of pixel elements in the same row and providing a respective summed row output, and determining position information about the interaction point from the summed column output signals and the summed row output signals. The method may comprise sensing by the pixel elements the light distribution in response to interaction of radiation with the scintillator element. The method may comprise providing an output for each pixel element.

The method may comprise amplifying each or sub-groups of the pixel element output signals individually. The method further may comprise summing the amplified pixel output signals to provide the summed row output signals and summed column output signals.

The method may comprise determining three dimensional coordinates of the position of the interaction point from the projection of the light sensed on the plane defined by the pixel elements. The method furthermore may comprise performing a parallax error correction based on the summed output signals.

Determining the depth of the interaction point may be performed based on the width of the sensed light distribution. The method may comprise converting analog summed column output signals and analog summed row output signals into one digital output signal. The method furthermore may comprise the functionality described by one, some, more or all components of the device as described above.

The amplitude values may be determined using peak sensors coupled to each of the pixel elements.

The present invention furthermore relates to a controller for controlling a device as described above for localising an interaction point from the light distribution generated in a monolithic scintillator element upon interaction of radiation with the scintillator element. The controller may be adapted for performing control of any of the device components as set out above or for performing steps according to any of the method steps as described above.

The present invention also relates to a computer program product for, when executed on a computer, performing a method as described above or controlling a device or system as described above. The present invention also relates to a machine readable data storage device storing the computer program product or the transmission of the computer program product over a local or wide area telecommunications network.

The present invention relates to a machine readable data storage device storing a computer program product as described in the present application

It is an advantage of embodiments according to the present invention that it is not necessary to calculate the depth of the gamma interaction point explicitly. It is an advantage of embodiments according to the present invention that methods and systems are provided that allow obtaining the parallax error so a parallax error corrected position in a two dimensional detection plane can be established.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Figure 1 is a schematic view in perspective of an embodiment of the system according to the invention;
Figure 2 is a schematic representation of an embodiment of the detector elements as can be used in an embodiment according to the present invention. It consists of a block of scintillator material and of a pixellated photo detector 12;
Figure 3 is a schematic representation of the pixel elements of the photodetector, as can be used in embodiments of the present invention;
Figure 4 is a schematic representation of the layout of an embodiment of the various summing circuits;
Figure 5 is a schematic representation of a possible realisation of the amplifier shown in Fig. 4;
Figure 6 is a schematic representation of a possible realisation of the summing circuits shown in Fig. 3.

Figure 7 is a schematic representation of a computing system as can be used for performing embodiments according to the present invention.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

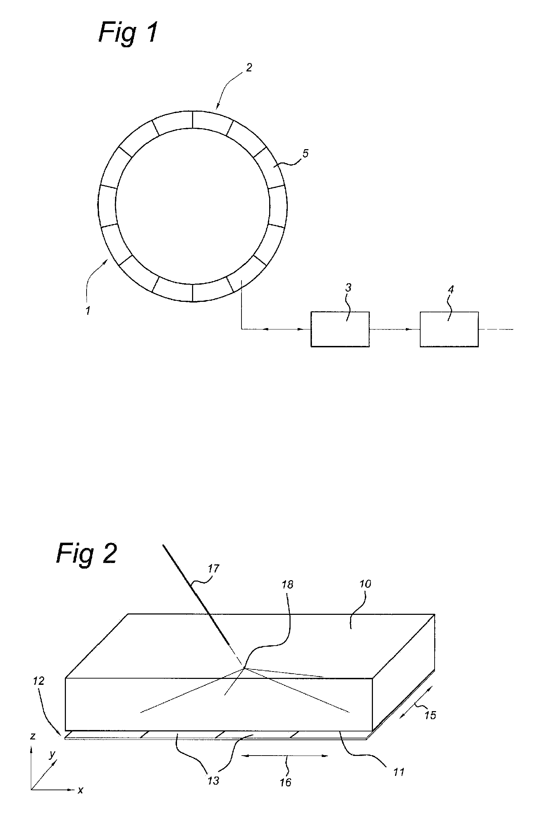

Referring to Fig. 1 an example of a PET system 1 operating in accordance with certain aspects of the present technique is illustrated. The PET system 1 includes a detector assembly 2, a controller 3 and an image display unit 4. In the embodiment shown the detector assembly 2 includes a number of detector elements 5, The detector elements may be assembled such that combined they form one or more rings, or one or more planes. With undivided scintillator blocks it is possible, when a ring geometry is used, to give the blocks such trapezoidal shape, that the dead space between the blocks may be further reduced.

Referring to figure 2, the scintillator element 10 is provided with one or more photodetectors 12. The photodetector 12 is coupled to a face 11 of the scintillator element 10. The photodetector is of the pixellated type, meaning that it has a number of individual pixel elements 13.

In the example shown in figures 1-4, the pixellated photo detector 12 comprises a number of orthogonal rows 15 and columns 16 of pixel elements 13. It is to be understood that the pixel elements 13 may alternatively be arranged in non-orthogonal rows and columns. Furthermore, in the example, the photo detector 12 comprises four rows 15 and four columns 16 so that the pixel elements 13 of the photo detector 12 form a 4 x 4 array. It is to be understood that in other examples the photodetector array may consist of any other number of rows and/or columns and that the number of rows can be different from the number of columns. In practical embodiments the number of rows and columns will be considerably larger, for instance 8 or 16. The number of rows and columns do not need to be the same. Figure 2 shows a ray of radiation 17, for instance a gamma ray of 511 keV, impinging on the scintillator element 10. The ray 17 entering the scintillator element 10 will interact with the scintillator material at the interacting point. The interaction of the rays with the scintillator material causes an optical emission or light distribution 18, that is projected on the pixel elements 13 of the photo detector 12. The spreading of the light distribution across the pixel elements 13 contains information about the three coordinates of the position of the interaction point of the ray in the scintillator element 10.

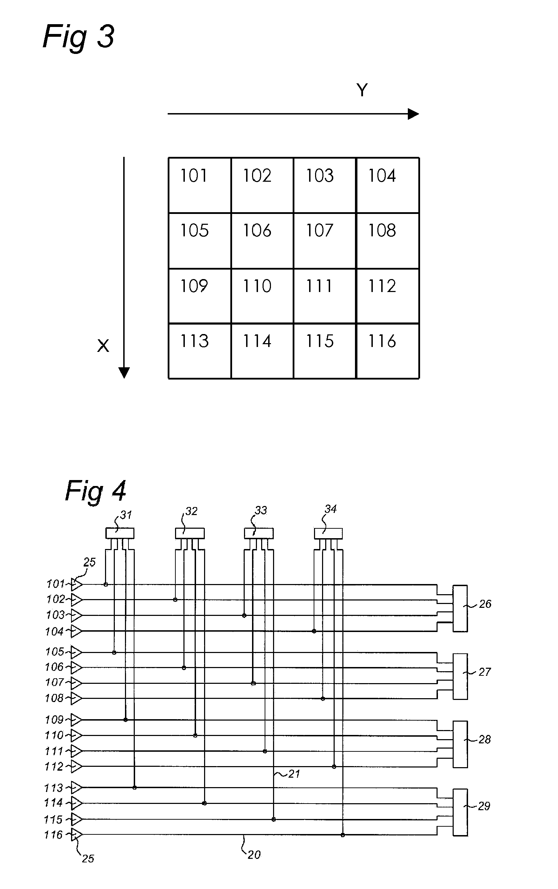

Referring again to figure 3, the pixel element array of the photo detector has 4 x 4 pixel elements 13. For convenience the individual pixel elements 13 are numbered from 101-116, as indicated in figure 3. In the following description reference will be made to these numbers.

According to an embodiment the individual output signals of the pixellated photo detector are amplified and an analog sum of all the signals belonging to pixel elements in an identical row or column in the photo detector is made. This reduces the number of analog channels to be processed by a factor two. If the number of pixel elements is larger, as will usually be the case, the reduction factor in the number of analog channels to be proccessed is much larger. If the photodetector has K rows and L colums, the factor gained is (KxL)/(k+L). For example, if the number of rows and columns is 16, the reduction factor is eight. Figure 4 shows a layout of the circuit for amplifying the output signals and then summing the rows and columns of the pixel element array.

The circuit includes a plurality of row lines 20 and column lines 21. The row lines 20 connect each of the pixel elements 13 shown in figure 3 to one of a set of row summing circuits. The first row of pixel elements, i.e. pixel elements 101, 102, 103 and 104, are electrically connected to a first row summing circuit 26. The second row of pixel elements 13, that is pixel elements 105, 106, 107, 108, is electrically connected to a second row summing circuit 27. The next two rows, i.e. the third row comprising pixel elements 109, 110, 111, 112 and the fourth and last row comprising pixel elements 113, 114, 115, 116, are electrically coupled to a third row summing circuit 28 and a fourth row summing circuit 29 respectively.

Similarly, each of the row lines 20 is connected to one column line 21. The column lines 21 are electrically coupled to a set of column summing circuits, each of the summing circuits being connected to all of the pixel elements 13 associated with one column. The column lines 21 connected to the pixel elements 101, 105, 109, 113 are electrically coupled to a first column summing circuit 31. The column lines 21 connected to pixel elements 102, 106, 110, 114, are coupled to a second column summing circuit 32. The column lines 21 connected to the pixel elements 103, 107, 111, 115 and the column lines 21 connected to the pixel elements 104, 108, 112, 116 are connected to a third column summing circuit 33 and a fourth column summing circuit 34 respectively. Preferably all lines are connected. It is to be noticed that for a given event not all the lines need to be recorded. Suppression, e.g. automatic suppression of lines having only a small signal contribution and thus contributing little useful information may be performed. It is to be noticed that the different amplifiers that can be used between the pixel element and the summing circuit may be different in type and/or gain factor.

Above is mentioned that each of the row lines 20 is connected to a separate pixel element 13 of the photo detector 12. In the embodiment shown each of the photo detector pixel elements 13 is provided with an amplifier 25 for amplifying the output signal coming directly from the pixel element 13. The amplifiers should not necessarily all have the same gain, this in order to correct for variations in efficiency between the different photo detector pixels, or variations in efficiency of the light collection. Moreover the amplifier can be designed in such a way as to correct for deviations from the linearity of the photo detector response.

More specifically, each of the pixel elements 13 of the photo detector 12 collects the light produced by the interacting of the gamma rays at the interaction point. A number of electrons collected in each pixel element is representative of the light intensity projected onto the area of the photo detector 12 at which the pixel element is located. After each interaction of a gamma ray, the charges from all the pixel elements are read out. In the embodiment of figures 1-3, the respective charges from the pixel elements are not directly divided over at least a column line and a row line, but are first amplified in the amplifiers 25 before the amplified output signal is connected to the associated column summing circuit and row summing circuit.

The pixel elements 13 of the photo detector 12 determine the two dimensional projection of the light distribution caused by the interaction of the gamma rays with the scintillator material, on the plane of the pixel elements 13. The output signals of each of the pixel elements 13 is first amplified and the amplified output signal is received by a column summing circuit 31-34 and a row summing circuit 26-29. In the summing circuits the amplified output signals are summed, resulting in a signal proportional to the sum of the signals in each row or each column of pixels. In the embodiment shown in figure 4 the output signals from all pixel elements of each column or row are summed, that is all output signals are summed in the X en Y direction (cf. figure 2). In the embodiment with a 4 x 4 photo detector array this means that instead of in total 16 output signals now only eight (4 column output signals and 4 row output signals) are provided. In an example wherein an array of 64 pixel elements (i.e. 8 rows and 8 columns), this means that the calculation does not need the 64 individual output signals, but only the 16 linear combinations of the output signals corresponding to the sums of all the rows and all the columns. The reduction of the two dimensional light profile as measured by an array of pixel elements to two orthogonal light profiles by summing the output signals of the pixel elements in the X en Y direction, does maintain most of the information about the light distribution caused by the interaction of the gamma rays with the scintillator material. Based on the information still available about the light distribution, it is possible to correct for the parallax error. This can be done by first calculating the depth of interaction, and calculating the parallax error from this depth of interaction. It can also be done by calculating the parallax correction directly from the data.

In further embodiments the method therefore comprises determining the 3D-coordinates of the position of the interaction point from the projection of the light distribution on the plane defined by the pixel elements. In these embodiments information about the distribution of the light across the different pixel elements, including information about the depth of interaction (DOI), is used to determine the 3D-coordinates. If the interaction takes place close to the photodetector, the light is concentrated on one or a few pixel elements, while for interaction far away from the photodetector array, the light is spread more evenly over the pixel elements.

In a PET scanner, a SPECT scanner or a gamma camera, it is necessary to determine the intersection point of the line of flight of the gamma ray with a plane that can be taken to be the plane of the photodetector. Because the gamma ray in general is not incident perpendicular to this plane, the X and Y co-ordinates of the gamma interaction point in the scintillator block will be different from the X and y co-ordinates of the above mentioned intersection. This is called the parallax error. The information about the interaction depth (distance between the interaction point and the pixel element in the Z-direction) and the information about the position of the interacting point projected on the plane of the pixel element, (i.e. the X, Y position), may be used by the controller 3 to perform calculations for reducing the parallax error for oblique incident photons. This ensures that a good spatial resolution, more specifically a good spatial resolution outside the central part of the field of view (FOV) of the detector, may be achieved.

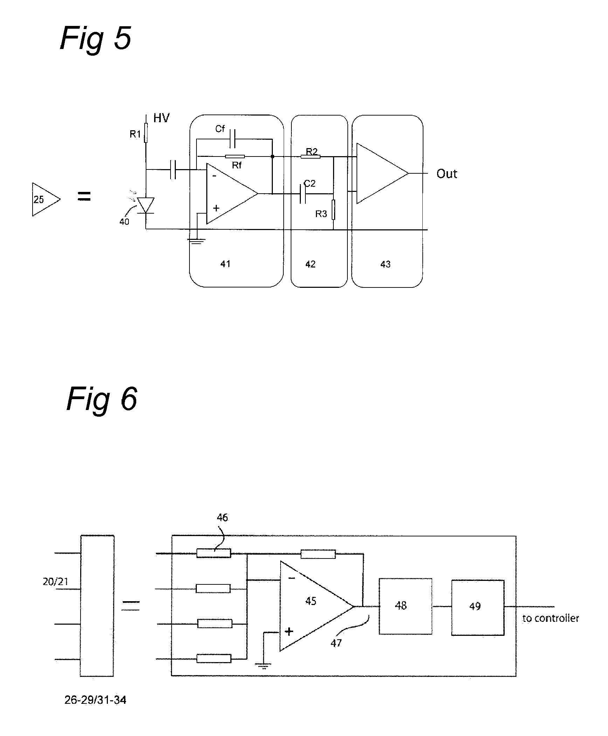

Fig. 5 shows an embodiment of a front-end amplifier 25 connected to each pixel element 13 for amplifying the output signal from the pixel element 13. The figure is a circuit diagram showing a light sensitive photodiode 40, for instance an avalanche photodiode, connected to a charge integrating stage 41, a pole-zero cancellation stage 42 and a shaping stage 43. The circuit in figure 5 is a commonly used design for an amplifier that must have a very low noise and be able to handle large data rates. The charge integration part 41 of the circuit must have a very large value of the feedback resistor in order to minimise the thermal noise of the resistor. This gives rise to an output signal with a long decay time, preventing the use of he amplifier for fast pulses. The shaping stage 43 reduces the length of the output pulses to a value typically less that 100 ns. This shaping is usually done with several RC-CR circuits. But this gives rise to an undershoot in the pulse that will prevent accurate determination of the pulse amplitude. The pole-zero-cancellation part 42 of the circuit will remove this undershoot. Typical values for the resistances and capacitances may be R1=10 kΩ; Rf=100 MΩ; R2=100 kΩ; R3=100 Ω, Cf= 1pF; C2=1 nF.

Fig. 6 shows an embodiment of a summing circuit used to sum the signals from the columns or the rows. Fig. 6 is a circuit diagram showing a number of row lines 20 connected to an adder 45 through a number of resistors 46. This may be a standard summing circuit for summing analog voltage signals. Typical value for the resistances 46 is 100Ω. The summed output signals on the output terminals 47 of each of the summing circuits 26-29,31-34 are then received by a peak sensing circuit 48 and a fast ADC 49, preferably arranged on the same semiconductor chip 50. The peak sensing circuit 48 and the ADC 49 reduce the output signals of the summing circuits to one single digital output signal. The digital output signal is sent to the controller 3. The controller 3 is configured to correct for the parallax error. This can be done by determining the three dimensional position of the interaction part based on the received digital output signals, and calculating the parallax correction, or the parallax correction can be derived directly from the signal profiles in the X and Y direction

According to embodiments of the invention the calculations can be considerably simplified by summing the pixels in the x and y direction, reducing the two-dimensional problem to two times a one-dimensional problems. Furthermore, a reduction in cost and complexity can be obtained by using an integrated front-end electronics circuit that directly calculates by hardware the sums of the rows and columns. With this hardware a smaller number of electronic channels needs to be read. The method and system are applicable to different scanning techniques, for instance to a PET scanner, a gamma scintigraphy scanner and/or a SPECT scanner.

The present invention also relates to a controller for controlling a system for localizing an interaction point from the light distribution generated in a monolithic scintillator element or a method for processing the data accordingly. The controller may be made in hardware as well as software and may provide the functionality for performing one, more or all steps of the methods as described above. The controller may be implemented in hardware as well as in software. The controller may provide control signals for controlling sensing by the pixels elements of the light distribution in response to the interaction of radiation with the scintillator element, for receiving an output signal representative of the light sensed, for summing, for each column of pixel elements, output signals of the pixel elements in that column, for summing, for each row of pixel elements, the output signals of the pixel elements in that row, and for determining position information about the interaction point based on the summed column output signals and the summed row output signals. The controller also may be adapted for synchronising the different steps to be performed.

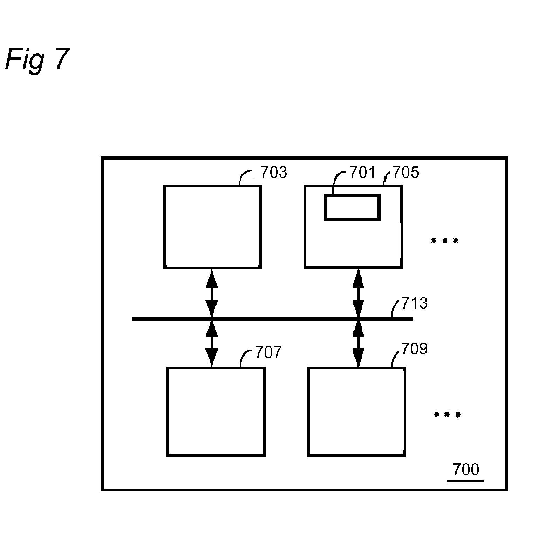

In a further aspect, the above-described method embodiments of the present invention or parts thereof may be implemented in a processing system 700 such as shown in Fig. 7. Fig. 7 shows one configuration of processing system 700 that includes at least one programmable processor 703 coupled to a memory subsystem 705 that includes at least one form of memory, e.g., RAM, ROM, and so forth. It is to be noted that the processor 703 or processors may be a general purpose, or a special purpose processor, and may be for inclusion in a device, e.g., a chip that has other components that perform other functions. Thus, one or more aspects of the present invention can be implemented in digital electronic circuitry, or in computer hardware, firmware, software, or in combinations of them. The processing system may include a storage subsystem 707 that has at least one disk drive and/or CD-ROM drive and/or DVD drive. In some implementations, a display system, a keyboard, and a pointing device may be included as part of a user interface subsystem 709 to provide for a user to manually input information. Ports for inputting and outputting data also may be included. More elements such as network connections, interfaces to various devices, and so forth, may be included, but are not illustrated in Fig. 7. The various elements of the processing system 700 may be coupled in various ways, including via a bus subsystem 713 shown in Fig. 7 for simplicity as a single bus, but will be understood to those in the art to include a system of at least one bus. The memory of the memory subsystem 705 may at some time hold part or all (in either case shown as 711) of a set of instructions that when executed on the processing system 700 implement the steps of the method embodiments described herein. Thus, while a processing system 700 such as shown in Fig. 7 is prior art, a system that includes the instructions to implement aspects of the methods for localizing an interaction point from the light distribution generated in a monolithic scintillator element, processing detector data and/or for determining position information is not prior art, and therefore Fig. 7 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is to be understood that although preferred embodiments, specific constructions and configurations, as well as materials, have been discussed herein for devices according to the present invention, various changes or modifications in form and detail may be made without departing from the scope of this invention as defined by the appended claims. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. Device for detecting light in a monolithic scintillator element, based on light sensed in at least one photodetector arranged at at least one face of the scintillator element for sensing the light distribution in response to the interaction of a gamma ray with the scintillator element; the at least one photodetector having photosensitive pixel elements, each pixel element providing an output signal representative of the light sensed by that pixel element; the device comprising:
- a set of column summing circuits, each column summing circuit being electrically coupled to a plurality of the pixel elements in a respective column and being configured so as to provide a summed column output signal;
- a set of row summing circuits, each row summing circuit being electrically coupled to a plurality of the pixel elements in a respective row and being configured so as to provide a summed row output signal; wherein the row summing circuits and column summing circuits are adapted to be electrically coupled to a controller configured to determine position information about the interaction point from the summed column output signals and summed row output signals.

2. Device as claimed in claim 1, wherein each of the pixel elements is coupled both to a column summing circuit and a row summing circuit.

3. Device as claimed in claim 1 or 2, comprising an amplifier between each pixel element and the associated summing circuit for amplifying the pixel element output signal.

4. Device as in claim 3 where the gain of each amplifier is different for each pixel to compensate for the variation in sensitivity of the photo detector pixel, or to compensate for the variation in light collection efficiency.

5. Device as in any of claim 3 or 4 where the gain of each amplifier is non-linear to compensate for the non linearity of the photo detector pixel response.

6. Device as in any of the claims 1, to 5 wherein the summing circuits are part of one or several integrated circuits.

7. Device as claimed in any of claims 1 to 6, the device comprising - a derivation means for deriving an amplitude value of a detection pulse on a signal line coupled to the set of column summing circuits and the set of row summing circuits; and
- a converting means for converting the amplitude value of the pulse to a digital number.

8. A device as in claim 7 wherein the derivation means is adapted for deriving the amplitude by charging a capacitor and performing ADC conversion, by sensing the peak amplitude of the pulse and performing ADC conversion, by determining the time over threshold, followed by a TDC conversion, or by sampling the pulse sufficiently fast, converting the samples values in a digital value by an ADC conversion and summing the digital values of the samples.

9. A device according to any of claims 7 or 8, wherein the derivation means and the converting means are integrated on one or several integrated circuits.

10. A device according to any of claims 1 to 9, wherein the device is adapted so as to determine a parallax error correction in a determination of a line of flight of light sensed from information contained in the row summing circuits and column summing circuits.

11. A device according to any of claims 1 to 10, wherein the device comprises said scintillator element, said scintillator element having a substantially trapezoidal shape.

12. A device according to any of claims 1 to 11, applied in a PET scanner, SPECT scanner and/or a gamma scintigraphy scanner.

13. A method for detecting light in a monolithic scintillator element, the method comprising
- obtaining for a plurality of independent pixel elements an output signal representative of light sensed in response to interaction of radiation with a scintillator element,
- summing output signals of pixel elements in the same column and providing a respective summed column output
- summing output signals of pixel elements in the same row and providing a respective summed row output, and
determining position information about the interaction point from the summed column output signals and the summed row output signals.

14. A controller for controlling a device according to any of claims 1 to 12 for localising an interaction point from the light distribution generated in a monolithic scintillator element upon interaction of radiation with the scintillator element.

15. A computer program product for, when executed on a computer, performing a method according to claim 13.
